# FASCICULE DE BREVET EUROPEEN

(11) **EP 2 560 923 B1**
(45) Date de publication et mention de la délivrance du brevet: **15.10.2014**
(21) Numéro de dépôt: 11716235.4
(22) Date de dépôt: 19.04.2011
(51) Int. Cl.: C02F 3/28

(54) **RÉACTEUR DE PURIFICATION ANAÉROBIE D'EAUX USÉES À FLUX ASCENDANT ET PROCÉDÉ DE MISE EN OEUVRE**
ANAEROBE ABWASSERAUFBEREITUNG IN EINEM AUFSTROMREAKTOR UND UMSETZUNGSVERFAHREN
ANAEROBIC PURIFICATION OF WASTE WATER IN AN UPFLOW REACTOR, AND METHOD OF IMPLEMENTING SAME

(30) Priorité: 20.04.2010 FR 1052967
(43) Date de publication de la demande: 27.02.2013
(73) Titulaire: Valbio, 31120 Portet Sur Garonne (FR)
(72) Inventeur: BUGAY, Stephan, F-13160 Chateaurenard (FR)
(74) Mandataire: Fourcade, Emmanuelle
(86) Numéro de dépôt international: PCT/EP2011/056274
(87) Numéro de publication internationale: WO 2011/131696

(56) Documents cités:
- EP-A1- 0 493 727

## Description

La présente invention concerne un réacteur de purification anaérobie d'eaux usées du type à boues granulaires ou granuleuses et à flux ascendant, et un procédé de purification le mettant en oeuvre.

Les réacteurs de purification anaérobie à flux ascendant, également qualifiés de réacteurs de méthanisation, ou méthaniseurs, sont utilisés de façon courante pour réaliser une épuration biologique naturelle des eaux usées au moyen de bactéries anaérobies qui transforment les polluants, substances organiques, en composants dépourvus de nocivité.

De tels réacteurs comportent, de façon classique, une cuve dans laquelle est placé un lit de boues, formé de bactéries anaérobies qui s'y multiplient en agrégats, constituant ce qu'il est courant d'appeler une biomasse granulaire ou granuleuse, en expansion dans de l'eau. L'influent à traiter, en général des eaux usées, est injecté en partie inférieure de la cuve, en distribution uniforme sous le lit de boues. Au cours de son ascension vers la partie supérieure opposée de la cuve, il est traité par les bactéries qui transforment les polluants qu'il contient en biogaz constitué principalement de méthane et de dioxyde de carbone. Le mélange biogaz - boues - eau ainsi formé monte vers la partie supérieure de la cuve, entraîné par les bulles de gaz, partie supérieure dans laquelle est disposé un séparateur triphasique. Ce séparateur comporte classiquement des moyens déflecteurs de gaz disposés sous une zone de décantation solide - liquide. Il réalise tout d'abord la dégazéification du mélange, puis la séparation par décantation du mélange solide - liquide ainsi débarrassé de la fraction gazeuse. Les particules de boue décantées retombent vers le fond de la cuve. En sommet du réacteur, en sortie du séparateur triphasique, il est collecté d'une part le biogaz, et d'autre part un effluent formé du liquide traité et de particules de boue fines qui n'ont pas pu en être séparées par décantation. Une partie de cet effluent est re-circulée, c'est-à-dire réinjectée dans la partie inférieure de la cuve de sorte à participer à la fluidisation du lit de boues contenu dans la cuve.

La présente invention vise à améliorer les systèmes de traitement par purification anaérobie d'eaux usées, en proposant un réacteur de purification anaérobie à flux ascendant qui présente notamment un rendement épuratoire supérieur à celui de ces réacteurs existants, et qui fournit un effluent liquide traité largement débarrassé de particules de boue solides.

A cet effet, il est proposé selon l'invention un réacteur de purification anaérobie d'eaux usées à flux ascendant, qui comporte une cuve contenant des granules de biomasse, plus particulièrement sous forme d'un lit de boues en expansion, des moyens d'injection d'influent dans une partie inférieure de cette cuve, de sorte à former dans cette dernière un flux de liquide ascendant dans le lit de boues, un séparateur triphasique de séparation de gaz, liquide et solide, qui est disposé dans une partie supérieure opposée de la cuve, et des moyens de collecte d'effluent hors d'une partie supérieure du séparateur triphasique. Ce réacteur se caractérise en ce que le séparateur triphasique comporte deux zones de décantation solide - liquide disposées l'une au-dessus de l'autre dans la direction du flux ascendant, au-dessus d'une zone dite inférieure pourvue de moyens de séparation de gaz, et en ce qu'il comporte des moyens de recirculation d'effluent comportant des moyens d'extraction d'effluent hors de la cuve entre les deux zones de décantation, et des moyens de réinjection de l'effluent ainsi extrait dans une partie inférieure de la cuve.

Dans toute la présente description, les termes inférieur et supérieur, au-dessus et au-dessous, haut et bas, etc., sont définis par rapport à la direction du flux ascendant de liquide dans le réacteur, ce flux étant sensiblement vertical et dirigé du bas vers le haut.

Les moyens de séparation de gaz du séparateur triphasique selon l'invention sont classiques en eux-mêmes. Il s'agit notamment de déflecteurs, sous forme de plaques annulaires inclinées, qui réalisent la séparation du biogaz qui a été formé dans la cuve par l'action des bactéries anaérobies sur l'influent, et du mélange eau traitée - boues granulaires, en orientant le gaz à l'écart des zones de décantation qui sont disposées au-dessus de la zone inférieure de séparation de gaz. Ces déflecteurs de gaz peuvent présenter toute forme, notamment être de section circulaire ou rectangulaire.

Dans le séparateur triphasique selon l'invention, il se produit avantageusement trois effets de décantation solide - liquide successifs, suivant la direction du flux ascendant.

Un premier effet de décantation se produit tout d'abord dans la zone inférieure de séparation du gaz, au niveau de laquelle sont décantées les particules de boues de taille la plus importante présentes dans le mélange triphasique. Ces particules les plus lourdes ayant été décantées retombent naturellement dans le voile de boues contenu dans la cuve, sous le séparateur.

Au-dessus des déflecteurs, toujours dans la direction du flux ascendant, il se produit dans le séparateur triphasique deux effets de décantation supplémentaires, le premier dans une zone de décantation dite intercalaire, puis le second dans une zone de décantation dite supérieure.

Selon l'invention, une partie de l'effluent traité atteignant le séparateur triphasique est extraite hors de celui-ci entre les deux zones de décantation, au-dessus de la zone de décantation intercalaire. Il en résulte avantageusement que la vitesse de passage de l'effluent dans la zone de décantation supérieure est ralentie par rapport à la vitesse de passage dans la zone de décantation intercalaire. Il est par conséquent effectué, dans cette zone de décantation supérieure, la décantation de particules de boue plus fines que dans la zone de décantation intercalaire, particules plus fines qui ne sont habituellement pas séparées de la phase liquide par les séparateurs triphasiques de l'art antérieur. Il en résulte une propreté, une clarté et une qualité de l'effluent traité finalement collecté en haut du séparateur, qui sont nettement améliorées par rapport aux réacteurs de l'art antérieur.

L'effluent collecté entre les zones de décantation intercalaire et supérieure est en outre avantageusement re-circulé dans la cuve, si bien qu'il participe à y fluidiser le lit granulaire. Les granules, ou particules, de boue qu'il contient contribuent en outre à maintenir le poids de boues dans la cuve à un niveau sensiblement constant dans le temps. Ces granules présentent en outre une taille relativement réduite, puisque le mélange solide - liquide parvenant en haut de la zone de décantation intercalaire a déjà avantageusement été soumis à deux effets de décantation successifs ayant eu pour effet d'éliminer les granules les plus lourds. Le gain en rendement épuratoire du réacteur selon l'invention peut être estimé à de 5 à 10 % supérieur par rapport aux réacteurs de l'art antérieur.

Le choix conforme à l'invention d'une recirculation externe à la cuve d'une partie de l'effluent traité s'avère en outre tout à fait avantageux, notamment en ce qu'il permet, si besoin, hors de la cuve, d'effectuer un contrôle continu des paramètres physico-chimiques des paramètres de l'effluent re-circulé.

En partie haute du séparateur, l'effluent traité final est récupéré de façon classique en elle-même, par susverse ou par aspiration.

Suivant des modes de réalisation préférés, l'invention répond en outre aux caractéristiques suivantes, mises en oeuvre séparément ou en chacune de leurs combinaisons techniquement opérantes.

Dans des modes de réalisation préférés de l'invention, le réacteur comporte des moyens d'arrêt de la recirculation d'effluent.

Suivant une caractéristique avantageuse de l'invention, la hauteur, mesurée selon la direction du flux de liquide ascendant, de la zone de décantation intercalaire est inférieure ou égale à la hauteur de la zone de décantation supérieure. De préférence, les deux zones de décantation solide - liquide présentent des hauteurs respectives sensiblement égales.

Dans des modes de réalisation préférés de l'invention, les moyens d'extraction d'effluent entre les deux zones de décantation comportent une tuyauterie périphérique disposée dans le séparateur, entre les deux zones de décantation, dont une paroi périphérique est perforée, et qui est reliée à des moyens d'aspiration d'effluent.

De même, les moyens de collecte d'effluent hors d'une partie supérieure du séparateur triphasique, au-dessus de la zone de décantation supérieure, comportent de préférence une tuyauterie périphérique disposée dans le séparateur au-dessus de la zone de décantation supérieure, dont une paroi périphérique est perforée, et qui est reliée à des moyens d'aspiration d'effluent.

Pour l'une comme l'autre des deux zones de décantation, cette tuyauterie périphérique peut, selon des caractéristiques avantageuses de l'invention, être associée à ou remplacée par une canalisation centrale formée de façon similaire.

Dans des modes de réalisation préférés de l'invention, les zones de décantation intercalaire et supérieure sont délimitées respectivement par des parois périphériques qui peuvent être de contours sensiblement de même forme ou de formes différentes. Ces parois périphériques peuvent présenter une forme cylindrique, conique, une section sensiblement rectangulaire, carrée, etc.

Suivant une caractéristique avantageuse de l'invention, des lamelles inclinées sont disposées dans au moins une zone de décantation, de préférence dans les deux zones de décantation. De telles lamelles, qui sont classiques en elles-mêmes, ont pour effet d'augmenter la surface de décantation à l'intérieur de chaque zone de décantation, et par voie de conséquence d'améliorer la qualité de l'effluent traité final.

Dans des modes de réalisation préférés de l'invention, les moyens d'injection d'influent comportent une canalisation s'étendant dans une partie inférieure de la cuve et des éléments supports de la canalisation reposant sur une paroi inférieure de la cuve.

Préférentiellement, la canalisation présente une paroi périphérique continue, c'est-à-dire qu'elle n'est pas percée de perforations. Les éléments supports de la canalisation sont des tubes creux en communication hydraulique avec la canalisation et comportant chacun une ouverture dirigée vers la paroi inférieure de la cuve, de préférence à une extrémité opposée à la canalisation. Ces éléments réalisent ainsi avantageusement en même temps le support de la canalisation à l'intérieur de la cuve, et l'injection d'influent dans cette dernière, directement dans le fond de la cuve, si bien qu'il est avantageusement tiré profit des boues granulaires présentes sous la canalisation principale pour assurer le traitement de l'influent. Dans les réacteurs proposés par l'art antérieur, ces boues ne sont pas exploitées.

L'invention concerne également un procédé de purification anaérobie d'eaux usées, au moyen d'un réacteur selon l'invention, selon lequel on injecte les eaux usées dans une partie inférieure de la cuve, on réalise la recirculation d'un premier volume d'effluent par extraction hors de la cuve entre les deux zones de décantation et réinjection dans une partie inférieure de la cuve, et on collecte un second volume d'effluent hors d'une partie supérieure du séparateur triphasique, au-dessus de la zone de décantation supérieure.

Dans des modes de mise en oeuvre préférés de l'invention, on réalise des arrêts séquentiels de la recirculation, ce qui permet avantageusement d'assurer que les particules de boues qui ont pu s'accumuler dans la zone inférieure de séparation de gaz du séparateur, retombent dans la cuve.

Enfin, l'invention concerne un séparateur triphasique pour un réacteur de purification anaérobie d'eaux usées, présentant les caractéristiques ci-avant.

L'invention sera maintenant plus précisément décrite dans le cadre de modes de réalisation préférés, qui n'en sont nullement limitatifs, représentés sur les figures 1 à 4, dans lesquelles :
- la figure 1 représente de façon schématique un réacteur de purification anaérobie d'eaux usées selon l'invention ;
- la figure 2 montre, en vue éclatée, un mode de réalisation d'un séparateur triphasique selon l'invention ;
- la figure 3 illustre, en vue éclatée, une autre variante d'un séparateur triphasique selon l'invention ;
- et la figure 4 représente la partie inférieure du réacteur de la figure 1, en section dans le plan A-A.

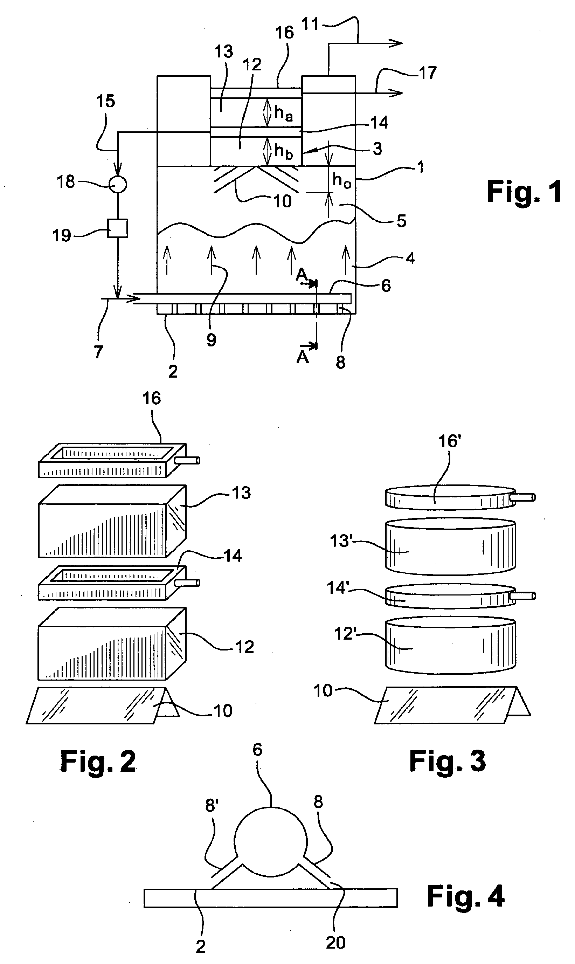

Un réacteur de purification anaérobie d'eaux usées selon l'invention est représenté sur la figure 1.

Ce réacteur comporte une cuve 1, délimitée en son fond par une paroi inférieure 2, également appelée radier. Dans sa partie supérieure opposée, il est disposé un séparateur triphasique 3, conçu pour permettre la séparation de gaz, liquide et solide.

Un lit de boues granulaires 4, formé d'agrégats de bactéries anaérobies mélangés dans de l'eau, est disposé à l'intérieur de la cuve 1, en partie inférieure de celle-ci. Au-dessus de ce lit de boues, un voile de boues 5 se forme naturellement, sous l'effet de la formation de biogaz dans la cuve, ce biogaz créant un secteur plus turbulent au-dessus du lit de boues.

Le réacteur comporte des moyens d'injection et de distribution d'influent liquide à traiter, en règle générale des eaux usées, dans une partie inférieure de la cuve 1, sous le lit de boues 4. Ces moyens comportent principalement une canalisation 6, qui s'étend à l'intérieur de la cuve 1, de préférence sensiblement parallèlement à la paroi de fond 2, et qui est délimitée par une paroi périphérique de préférence continue. Cette canalisation 6 est reliée à une pompe d'injection qui l'alimente en influent, selon la direction indiquée en 7 sur la figure.

La canalisation 6 est supportée, à l'intérieur de la cuve, par des éléments supports 8 qui reposent sur la paroi de fond 2 de la cuve et qui sont répartis à intervalles réguliers, de préférence sur toute la longueur de la canalisation. Ces éléments support 8 sont de préférence en communication hydraulique avec la canalisation 6 et percés d'au moins une ouverture pour l'introduction dans la cuve 1 du liquide amené par la canalisation 6. Ils seront décrits de façon plus détaillée plus avant dans la présente description.

Lorsque, conformément à un procédé de mise en oeuvre du réacteur selon l'invention, l'influent est injecté dans la cuve 1, dans le fond de cette dernière, il est entraîné à travers le lit de boues 4 dans un flux ascendant, dirigé du fond de la cuve vers sa partie supérieure opposée, selon la direction 9 indiquée sur la figure, sensiblement verticalement. Les matières polluantes qu'il contient y sont converties par les bactéries anaérobies en un gaz riche en méthane, couramment appelé biogaz. Le mélange biogaz - liquide traité - particules de boues ainsi formé poursuit son ascension vers le sommet opposé de la cuve 1, entraîné notamment par le gaz qui crée une turbulence au-dessus du lit de boues 4, formant le voile de boues 5.

Le mélange triphasique parvient, en partie supérieure de la cuve, au séparateur triphasique 3.

Ce séparateur triphasique 3 comporte une zone inférieure dite zone déflectrice, qui est pourvue de moyens de séparation du gaz et du mélange liquide - solide. Ces moyens de séparation se présentent de préférence sous forme de plaques annulaires inclinées, ou déflecteurs 10. Les déflecteurs de gaz 10 sont classiques en eux-mêmes, et peuvent prendre toute forme connue de l'homme du métier. En particulier, tout nombre et tout agencement de déflecteurs entre dans le cadre de l'invention, dans la mesure où ce nombre et cet agencement permettent une séparation efficace du biogaz et du mélange liquide-solide. Dans l'exemple de réalisation préféré objet de la figure 1, on a représenté à titre d'exemple trois déflecteurs 10 agencés parallèlement les uns aux autres.

Le biogaz ainsi séparé poursuit son mouvement ascendant jusqu'au sommet de la cuve 1, où sont disposés des moyens pour sa collecte, selon la direction 11 indiquée sur la figure. Ces moyens de collecte sont classiques en eux-mêmes.

Dans la zone déflectrice inférieure, au niveau des plaques déflectrices 10, il se produit en outre un premier effet de décantation solide - liquide, qui permet de débarrasser le mélange solide - liquide des particules de boue de taille la plus importante. Ces particules retombent naturellement dans la cuve. Au-dessus des déflecteurs 10, la vitesse du flux ascendant du mélange liquide - solide débarrassé de la fraction gazeuse décroit.

Le séparateur triphasique 3 selon l'invention comporte, au-dessus des déflecteurs 10, dans la direction du flux ascendant 9, deux zones de décantation distinctes disposées l'une au-dessus de l'autre, dont une zone de décantation dite intercalaire 12 et une zone de décantation dite supérieure 13. Dans chacune de ces zones de décantation, il se produit une séparation par décantation de liquide traité et de particules de boue.

Dans des modes de réalisation préférés de l'invention, les hauteurs respectives, dites hₐ et h_{b}, des zones de décantation intercalaire 12 et supérieure 13 sont sensiblement identiques. Un tel dimensionnement relatif, bien que particulièrement avantageux, n'est cependant pas restrictif de l'invention. La hauteur de la zone de décantation intercalaire 12 est de préférence supérieure ou égale à 50 cm.

Dans la zone de décantation intercalaire 12, la turbulence étant plus réduite que dans la partie inférieure de la cuve 1, en raison de l'absence de gaz dans le mélange liquide - solide, les particules de boues les plus lourdes commencent à se décanter. Elles retombent dans la zone inférieure déflectrice, où elles s'accumulent. Le liquide poursuit quant à lui sa montée vers le sommet du séparateur. Les particules de boues les plus grosses en ont été séparées par décantation.

Le réacteur comporte des moyens d'extraction d'effluent traité entre les deux zones de décantation 12 et 13. Ces moyens sont de préférence formés d'une tuyauterie périphérique 14, disposée dans le séparateur 3 entre la zone de décantation intercalaire 12 et la zone de décantation supérieure 13. La paroi périphérique de cette tuyauterie est percée d'orifices. Cette tuyauterie 14 est associée à des moyens d'aspiration, par exemple d'une pompe de recirculation 18 associée à un débitmètre 19, qui sont classiques en eux-mêmes, et qui sont configurés de sorte à provoquer l'aspiration d'effluent à travers les orifices de la tuyauterie, hors du séparateur triphasique.

L'effluent ainsi extrait, composé de liquide et de particules de boue fines, est dirigé, par un circuit de recirculation du réacteur externe à la cuve, vers des moyens de réinjection en partie inférieure de la cuve 1, selon la direction indiquée en 15 sur la figure. De préférence, la réinjection est réalisée par le biais de la canalisation d'injection 6 et des éléments support 8, en même temps que l'influent à traiter. Le circuit de recirculation peut le cas échéant être associé à un système de régulation des paramètres physico-chimiques, notamment de la température et du pH, de l'effluent re-circulé avant sa réintroduction dans la cuve 1.

Le débit d'effluent re-circulé est déterminé par des calculs du ressort de l'homme du métier, en fonction des caractéristiques particulières du réacteur, des boues granulaires, de l'influent, ainsi que de la qualité souhaitée pour l'effluent traité final.

De manière tout à fait avantageuse, grâce à la présence dans le réacteur selon l'invention de deux étages de décantation distincts parcourus par le mélange effluent - particules de boues avant d'atteindre le sommet de la zone de décantation intercalaire 12, les particules de boues contenues dans l'effluent re-circulé présentent une taille réduite, si bien qu'elles ne subissent pas ou très peu de cisaillement mécanique au sein de la pompe d'aspiration 18, et que le risque de désagrégation de ces particules est limité. Ces particules sont réinjectées dans la cuve 1, où elles sont aptes à participer à nouveau efficacement au traitement de l'influent.

Dans la zone de décantation supérieure 13, le débit d'effluent se trouve plus réduit que dans la zone de décantation intercalaire 12. Il s'y produit un piégeage des granules solides plus important. Des particules de boue plus fines y sont séparées, par décantation, du liquide traité.

En partie supérieure du séparateur 3, au-dessus de la zone de décantation supérieure 13, le réacteur est pourvu de moyens de collecte d'effluent. Ces moyens de collecte se présentent par exemple, comme représenté sur la figure 1, sous la forme d'une tuyauterie périphérique 16 dont une paroi périphérique est percée d'orifices pour l'aspiration d'effluent. La tuyauterie 16 est associée à des moyens, classiques en eux-mêmes, d'aspiration de l'effluent traité final hors du réacteur, selon la direction 17 indiquée sur la figure.

L'effluent traité final peut également être récupéré par susverse, ou, dans des variantes de l'invention, par un ou des tube(s) de collecte disposé(s) dans une partie centrale du séparateur.

L'effluent traité ainsi récupéré a été largement débarrassé de particules de boue, même fines. Il ne contient ainsi que très peu de particules, et il présente par conséquent un haut degré de propreté et de clarté. Le réacteur selon l'invention présente ainsi une action épuratoire élevée, améliorée par rapport aux réacteurs de l'art antérieur.

Afin de permettre aux particules de boue qui s'accumulent dans la zone inférieure déflectrice de retomber dans le voile de boues situé dans la cuve, sous le séparateur triphasique, un procédé de mise en oeuvre du réacteur selon l'invention prévoit avantageusement que soient réalisées, périodiquement, des interruptions de la recirculation d'effluent, notamment par arrêt de la pompe 18. Lors de ces phases d'arrêt séquentiel de la recirculation, le débit d'effluent dans la zone déflectrice étant plus réduit, les particules qui étaient bloquées dans cette zone retombent dans le voile de boues. Dans des modes de mise en oeuvre préférés de l'invention, la fraction horaire d'arrêt de la recirculation est comprise entre 5 et 50 %, de préférence entre 20 et 40 %. Un tel choix de plage de valeur de cette fraction horaire assure avantageusement l'élimination et le retour vers le voile de boues 5 de toutes particules de boue pouvant stagner dans la zone déflectrice inférieure.

Deux variantes de réalisation du séparateur triphasique selon l'invention sont illustrées respectivement sur les figures 2 et 3.

De façon générale, chaque zone de décantation 12, 13 est délimitée par une paroi périphérique pouvant présenter toute forme.

Dans l'exemple de réalisation illustré sur la figure 2, chaque zone de décantation 12, 13 présente une section sensiblement rectangulaire. Chacune des tuyauteries 14, 16 associées présente un contour externe de forme sensiblement similaire à celui de la zone de décantation qu'elle surplombe.

Dans l'exemple de réalisation représenté sur la figure 3, chaque zone de décantation 12', 13', présente une section sensiblement circulaire.

L'invention n'exclut pas pour autant toute autre configuration des zones de décantation, et notamment des configurations dans lesquelles la zone de décantation intercalaire 12 et la zone de décantation supérieure 13 sont délimitées par des parois périphériques de formes différentes.

Un exemple de réalisation des moyens d'injection d'influent dans la cuve particulièrement préféré dans le cadre de l'invention est représenté de façon plus détaillée sur la figure 4.

Dans ce mode de réalisation préféré de l'invention, les éléments supports 8 de la canalisation 6 sont des tubes creux en communication hydraulique avec la canalisation 6 par une extrémité, et reposant par leur extrémité opposée sur la paroi de fond 2 de la cuve. Ces tubes 8 présentent, de préférence à cette extrémité reposant sur la paroi de fond de la cuve, une ouverture 20 dirigée en direction de la paroi de fond 2, de sorte qu'ils assurent l'injection d'influent dans la cuve 1, en direction de cette paroi de fond. Chaque ouverture 20 s'inscrit de préférence dans un plan sensiblement perpendiculaire à la paroi de fond 2 de la cuve, si bien que l'injection est réalisée en biais par rapport à cette paroi de fond, et au plus près d'elle.

Préférentiellement, des tubes 8, 8' sont disposés de part et d'autre d'un axe longitudinal de la canalisation 6, et ils s'étendent depuis cette dernière en formant un angle d'environ 45 degrés avec cet axe longitudinal, de sorte à constituer un appui stable sur la paroi de fond 2 de la cuve, comme illustré sur la figure 4. Dans le mode de réalisation représenté sur cette figure, les tubes 8, 8' sont associés par paires disposées chacune dans un même plan transversal à la canalisation 6, un tel mode de réalisation n'étant cependant nullement restrictif de l'invention.

Les paramètres caractéristiques du réacteur selon l'invention sont de manière générale définis selon des calculs du ressort de l'homme du métier. En particulier, le débit traversier est déterminé en fonction de la surface de la cuve et de la charge massique appliquée sur les bactéries. Le débit de recirculation d'effluent est déterminé de telle sorte que le débit traversier, qui est égal à la somme du débit d'alimentation en influent et du débit de recirculation, reste constant dans le temps (en dehors des phases d'arrêt de la recirculation).

Lors de la mise en oeuvre du procédé de purification selon l'invention, il se produit dans le séparateur triphasique 3 trois niveaux de décantation successifs.

Une première partie des particules de boue contenues dans le mélange parvenant au séparateur triphasique 3, dont le diamètre est supérieur à une valeur dite DPₒ, est séparée dans la zone déflectrice inférieure. Ces particules retombent dans la cuve, dans le voile de boues 5.

Les particules de diamètre inférieur à DPₒ parviennent à la zone de décantation intercalaire 12. Dans cette dernière, les particules de diamètre supérieur à une valeur dite DPₐ sont décantées. Ces particules retombent dans la zone inférieure déflectrice, où elles s'accumulent jusqu'au prochain arrêt de la recirculation. Lors d'un tel arrêt, elles retombent alors dans le voile de boues 5.

Les particules de diamètre inférieur à DPₐ, pour partie sont extraites du séparateur avec l'effluent re-circulé, et pour partie atteignent la zone de décantation supérieure 13. Dans cette zone, à nouveau, les particules les plus grosses, de diamètre supérieur à une valeur dite DP_{b}, sont décantées.

Les particules de diamètre inférieur à DP_{b} sont collectées avec l'effluent traité final.

De manière générale, les valeurs DPₒ, DPₐ, DP_{b} sont liées, selon la loi de Stokes, qui est connue de l'homme du métier, aux différents paramètres du réacteur, du procédé pour sa mise en oeuvre, des granules de boue et de l'effluent.

Deux exemples de configurations du réacteur selon l'invention et du procédé pour sa mise en oeuvre sont donnés ci-après à simple titre illustratif.

Les valeurs des différents paramètres du réacteur et du procédé pour sa mise en oeuvre, pour chacun de ces Exemples 1 et 2, sont indiquées dans le tableau 1 ci-après.

**Tableau 1 - Paramètres du réacteur et du procédé pour sa mise en oeuvre**

| Paramètre | Exemple 1 | Exemple 2 |
|---|---|---|
| Périmètre de la zone déflectrice (m) | 15 | 15 |
| Hauteur hₒ de la zone déflectrice (m) | 1 | 0,7 |
| Nombre de plaques déflectrices 10 | 3 | 6 |
| Surface de décantation de la zone intercalaire 12 (m²) | 75 | 75 |
| Hauteur hₐ de la zone de décantation intercalaire 12 (m) | 0,7 | 0,7 |
| Surface de décantation de la zone supérieure 13 (m²) | 12 | 12 |
| Hauteur h_{b} de la zone de décantation supérieure 13 (m) | 0,7 | 0,7 |
| Différence de masse volumique entre les particules de boues et l'effluent (kg/m³) | 10 | 10 |
| Viscosité de l'effluent (Pa.s) | 0,001 | 0,001 |
| Débit traversier (m³/h) | 75 | 75 |
| Débit d'alimentation (m³/h) | 5 | 40 |
| Débit de recirculation (m³/h) | 70 | 35 |
| Fraction horaire d'arrêt de la recirculation | 37,5% | 32% |

Pour chacun des exemples 1 et 2, le diamètre maximal des particules de boues, tel qu'obtenu au sommet de chacune des trois zones du séparateur triphasique, sont indiquées dans le tableau 2 ci-après.

**Tableau 2 - Diamètre maximal des particules au sommet de chaque zone du séparateur triphasique selon l'invention**

| Diamètre maximal des particules | Exemple 1 | Exemple 2 |
|---|---|---|
| DPₒ (µm) | 291 | 246 |
| DPₐ (µm) | 225 | 225 |
| DP_{b} (µm) | 142 | 164 |

Les résultats exposés dans le tableau 2 ci-dessus montrent clairement que les particules en sortie de la zone de décantation supérieure 13, c'est-à-dire les particules qui sont évacuées dans l'effluent traité final, présentent une taille avantageusement très réduite. L'effluent traité final présente ainsi un degré de propreté élevé. Les particules en sortie de la zone de décantation intercalaire 12, c'est-à-dire les particules qui sont susceptibles d'être évacuées dans l'effluent re-circulé, présentent également une taille maximale réduite. Les particules les plus grosses ont été décantées dans la zone inférieure déflectrice du séparateur.

Par ailleurs, il est constaté, pour l'un comme l'autre de ces exemples de mise en oeuvre, que l'application d'étapes d'arrêt séquentiel de la recirculation permet efficacement d'éviter toute accumulation durable de particules de boue dans la zone inférieure déflectrice. Les particules décantées dans la zone déflectrice et dans la zone de décantation intercalaire 12 retombent intégralement dans la cuve 1, dans laquelle elles participent, avec les particules contenues dans l'effluent re-circulé, à maintenir dans la cuve un poids de boues opérantes sensiblement constant dans le temps. Seules peu de particules de boue, les plus fines, sont au final extraites du réacteur avec l'effluent final traité qui est collecté en partie haute du séparateur triphasique. Il en résulte un rendement épuratoire du réacteur amélioré par rapport aux dispositifs proposés par l'art antérieur.

La description ci-avant illustre clairement que par ses différentes caractéristiques et leurs avantages, la présente invention atteint les objectifs qu'elle s'était fixés. En particulier, elle fournit un réacteur de purification anaérobie d'eaux usées à boues granulaires ou granuleuses à flux ascendant, qui comporte un séparateur triphasique pour la séparation biogaz / boues granulaires / effluent traité à triple effet de décantation et double renvoi des granules de boue dans la cuve, d'une part par l'effluent re-circulé, par un circuit externe à la cuve, et d'autre part directement depuis la zone inférieure de séparation de gaz. Ce réacteur et le procédé pour sa mise en oeuvre permettent d'obtenir un effluent liquide traité de haut degré de propreté, largement débarrassé de particules de boues, y compris de particules de fine granulométrie, et avec un rendement épuratoire élevé. Ils assurent en effet notamment que les particules renvoyées dans la cuve, tant par la voie de la recirculation que par celle du renvoi direct depuis la zone déflectrice inférieure, conservent leur intégrité et leur efficacité d'action épuratoire.

## Revendications

1. Réacteur de purification anaérobie d'eaux usées à flux ascendant, comportant une cuve (1) contenant des granules de biomasse, des moyens d'injection d'influent dans une partie inférieure de ladite cuve, un séparateur triphasique (3) de séparation de gaz, liquide et solide, disposé dans une partie supérieure opposée de ladite cuve, et des moyens de collecte d'effluent traité hors d'une partie supérieure dudit séparateur triphasique, **caractérisé en ce que** le séparateur triphasique comporte deux zones de décantation solide - liquide (12, 13) disposées l'une au-dessus de l'autre dans la direction du flux ascendant (9), au-dessus d'une zone inférieure pourvue de moyens de séparation de gaz (10), et **en ce qu'**il comporte des moyens de recirculation d'effluent comportant des moyens d'extraction d'effluent hors de ladite cuve entre lesdites deux zones de décantation et des moyens de réinjection de l'effluent extrait dans une partie inférieure de la cuve (1).

2. Réacteur selon la revendication 1, **caractérisé en ce qu'**il comporte des moyens d'arrêt de la recirculation d'effluent.

3. Réacteur selon la revendication 1 ou 2, **caractérisé en ce que** les deux zones de décantation solide - liquide (12, 13) présentent des hauteurs respectives sensiblement égales.

4. Réacteur selon l'une quelconque des revendications 1 à 3, **caractérisé en ce que** les moyens de séparation de gaz comportent des plaques déflectrices (10).

5. Réacteur selon l'une quelconque des revendications 1 à 4, **caractérisé en ce que** les moyens d'extraction d'effluent entre les deux zones de décantation (12, 13) comportent une tuyauterie périphérique (14) disposée dans le séparateur (3), entre lesdites deux zones de décantation, dont une paroi périphérique est perforée et qui est reliée à des moyens d'aspiration d'effluent.

6. Réacteur selon l'une quelconque des revendications 1 à 5, **caractérisé en ce que** des lamelles inclinées sont disposées dans au moins une zone de décantation, de préférence dans les deux zones de décantation (12,13).

7. Réacteur selon l'une quelconque des revendications 1 à 6, **caractérisé en ce que** les moyens d'injection d'influent comportent une canalisation (6) s'étendant dans une partie inférieure de la cuve (1) et des éléments (8) supports de ladite canalisation reposant sur une paroi inférieure (2) de la cuve (1).

8. Réacteur selon la revendication 7, **caractérisé en ce que** les éléments (8) supports de la canalisation (6) sont des tubes creux en communication hydraulique avec ladite canalisation et comportant une ouverture (20) dirigée vers la paroi inférieure (2) de la cuve (1).

9. Procédé de purification anaérobie d'eaux usées au moyen d'un réacteur selon l'une quelconque des revendications 1 à 8, **caractérisé en ce qu'**on injecte les eaux usées dans une partie inférieure de la cuve (1), on réalise la recirculation d'un premier volume d'effluent par extraction hors de ladite cuve entre les deux zones de décantation (12, 13) et réinjection dans une partie inférieure de la cuve (1), et on collecte un second volume d'effluent hors d'une partie supérieure du séparateur triphasique (3).

10. Procédé selon la revendication 9, **caractérisé en ce qu'**on réalise des arrêts séquentiels de la recirculation.

## Patentansprüche

1. Reaktor zur anaeroben Abwasserreinigung mit aufwärts steigendem Fluss, der einen Behälter (1) enthält, der Biomassekörnchen, Mittel zur Einleitung von einem Einfluss in einem unteren Teil des besagten Behälters, einen Dreiphasenabscheider (3) zur Trennung von Gas, Flüssigkeit und festen Stoffen, der in einem oberen, dem besagten Behälter gegenüberliegenden Teil angeordnet ist, und Mittel zur Sammlung von behandeltem Ausfluss außerhalb eines oberen Teils des Dreiphasenabscheiders, umfasst, **dadurch gekennzeichnet, dass** der Dreiphasenabscheider zwei Klärzonen fest - flüssig (12, 13) enthält, wovon eine über der anderen in Richtung der aufsteigenden Strömung (9), über einem unteren, mit Mittel zur Gastrennung (10) ausgestatteten Bereich angeordnet ist, und dadurch, dass er Mittel zur Rückführung von dem Ausfluss enthält, die Mittel zur Extraktion des Ausflusses außerhalb des besagten Behälters zwischen den beiden Klärzonen und Mittel zur Wiedereinleitung des in einem unteren Teil des Behälters (1) extrahierten Ausflusses.

2. Reaktor nach Anspruch 1, **dadurch gekennzeichnet, dass** er Mittel zum Stoppen der Rückführung von dem Ausfluss enthält.

3. Reaktor nach Anspruch 1 oder 2, **dadurch gekennzeichnet, dass** die zwei Klärzonen fest - flüssig (12, 13) jeweils im Wesentlichen gleiche Höhen aufweisen.

4. Reaktor nach irgendeinem der Ansprüche 1 bis 3, **dadurch gekennzeichnet, dass** die Mittel zur Gastrennung Strömungsleitplatten (10) enthalten.

5. Reaktor nach irgendeinem der Ansprüche 1 bis 4, **dadurch gekennzeichnet, dass** die Mittel zur Extraktion des Ausflusses zwischen den zwei Klärzonen (12, 13) eine Umlaufleitung (14) enthalten, die im Abscheider (3) zwischen den besagten zwei Klärzonen angeordnet ist, bei der eine umlaufende Wand perforiert ist, und die mit Mitteln zur Ansaugung des Ausflusses verbunden ist.

6. Reaktor nach irgendeinem der Ansprüche 1 bis 5, **dadurch gekennzeichnet, dass** in mindestens einer der Klärzonen schräge Lamellen angeordnet sind, vorzugsweise in beiden Klärzonen (12,13).

7. Reaktor nach irgendeinem der Ansprüche 1 bis 6, **dadurch gekennzeichnet, dass** die Mittel zur Einleitung von einem Einfluss eine in einem unteren Teil des Behälters (1) verlaufende Kanalisation (6) und auf einer unteren Wand (2) des Behälters (1) aufliegenden Trägerelemente (8) enthalten.

8. Reaktor nach Anspruch 7, **dadurch gekennzeichnet, dass** die Trägerelemente (8) der Kanalisation (6) hohle Röhren sind, welche in hydraulischer Verbindung mit besagter Kanalisation stehen und eine Öffnung (20) in Richtung der unteren Wand (2) des Behälters (1) enthalten.

9. Verfahren zur anaeroben Reinigung von Abwässern mit Hilfe eines Reaktors nach irgendeinem der Ansprüche 1 bis 8, **dadurch gekennzeichnet, dass** man die Abwässer in einen unteren Teil des Behälters (1) einleitet, dass man die Rückführung eines ersten Ausflussvolumens durch Extraktion außerhalb des besagten Behälters zwischen den zwei Klärzonen (12,13) und Wiedereinleitung in einen unteren Teil des Behälters (1) durchführt und dass man ein zweites Ausflussvolumen außerhalb eines oberen Teils des Dreiphasenabscheiders (3) sammelt.

10. Verfahren nach Anspruch 9, **dadurch gekennzeichnet, dass** man sequentielle Stopps der Rückführung durchführt.

## Claims

1. Anaerobic waste water purification upflow reactor, comprising a vessel (1) containing biomass granules, means of injecting influent into a lower part of said vessel, a three-phase separator (3) for separating gas, liquid and solid, which is located in an opposite upper part of said vessel, and means of collecting treated effluent out of an upper part of said three-phase separator, **characterized in that** the three-phase separator comprises two solid/liquid settlement zones (12, 13) positioned one above the other in the direction of the upflow (9), above a lower zone provided with gas separation means (10), and **in that** it comprises effluent recirculation means that comprise means of extracting effluent from said vessel between said two settlement zones and means of re-injecting the extracted effluent into a lower part of the vessel (1).

2. Reactor according to claim 1, **characterized in that** it comprises means of stopping the effluent recirculation.

3. Reactor according to claim 1 or 2, **characterized in that** the respective heights of the two solid/liquid settlement zones (12, 13) are substantially equal.

4. Reactor according to any one of claims 1 to 3, **characterized in that** the gas separation means comprise deflector plates (10).

5. Reactor according to any one of claims 1 to 4, **characterized in that** the means of extracting effluent between the two settlement zones (12, 13) comprise a peripheral piping (14) positioned in the separator (3) between said two settlement zones, one wall of which is perforated, and which is connected to effluent aspiration means.

6. Reactor according to any one of claims 1 to 5, **characterized in that** inclined strips are positioned in at least one settlement zone, preferably in both settlement zones (12, 13).

7. Reactor according to any one of claims 1 to 6, **characterized in that** the means of injecting influent comprise a pipe (6) extending into a lower part of the vessel (1) and mounting elements (8) for said pipe resting on a lower wall (2) of the vessel (1).

8. Reactor according to claim 7, **characterized in that** the mounting elements (8) for the pipe (6) are hollow tubes in hydraulic communication with said pipe and comprising an opening (20) oriented towards the lower wall (2) of the vessel (1).

9. Method of anaerobic waste water purification, by means of a reactor according to any one of claims 1 to 8, **characterized in that** the waste water is injected into a lower part of the vessel (1), a first volume of effluent is re-circulated, through extraction from said vessel between the two settlement zones (12, 13) and re-injection into a lower part of the vessel (1), and a second volume of effluent is collected from an upper part of the three-phase separator (3).

10. Method according to claim 9, **characterized in that** there are realized sequential stops in the recirculation.
